# EUROPÄISCHE PATENTANMELDUNG

(11) **EP 0 864 800 A1**
(43) Veröffentlichungstag der Anmeldung: **16.09.1998**
(21) Anmeldenummer: 97104126.4
(22) Anmeldetag: 12.03.1997
(51) Int. Cl.: F16L 59/16

(54) **Anschlussverkleidung für Heizkörper-Vor- und/oder Rücklaufanschlüsse**

(71) Anmelder: Theodor Heimeier Metallwerk GmbH & Co KG, 59592 Erwitte (DE)
(72) Erfinder: Werner, Klaus, 59581 Warstein (DE); Marx, Annette, 59581 Warstein (DE); Hares, Ludger, 58730 Fröndenberg (DE)

(57) **Zusammenfassung**

Bei einer Anschlußverkleidung für Heizkörper-Vor- und/oder Rücklauf-Anschlüsse mit mindestens zwei schalenförmigen Kunststoff-Formteilen (1), (2) die die Anschlüsse (3), (4), (5) umgeben und die mittels druckknopfverschlußartigen Verbindungselementen (6), (7) lösbar miteinander verbunden sind, weisen die Kunststoff-Formteile (1), (2) zur einfachen und kostengünstigen Ausbildung und Montage in ihrem Inneren (8) zumindest teilweise elastisch verformbare Rippen (9), (10) auf, die im wesentlichen rohrförmigen Teile (11) der Anschlüsse (3), (4), (5) klemmend umgreifen.

## Beschreibung

Die Erfindung betrifft eine Anschlußverkleidung für Heizkörper-Vor- und/oder Rücklauf-Anschlüsse nach dem Oberbegriff des Anspruches 1.

Eine derartige Anschlußverkleidung ist aus dem Deutschen Gebrauchsmuster 7436866 vorbekannt. Diese vorbekannte Anschlußverkleidung weist Ausnehmungen zur Durchführung der Anschlüsse durch die Kunststoff-Formteile auf, welche entsprechend dem Querschnitt der Anschlüsse kürz- und damit erweiterbar sind, um den Sitz der Kunststoff-Formteile auf den Anschlüssen zu gewährleisten.

Diese vorbekannte Anschlußverkleidung, die einerseits der Isolierung der Anschlüsse, andererseits auch dazu dient den Anschlüssen ein optisch ansprechendes Äußeres zu geben, weisen jedoch den Nachteil auf, daß auf Grund der gewählten Anpassung des Querschnittes der Ausnehmungen an den Querschnitt der Anschlüsse die Anschlußverkleidung nur lose auf den Anschlüssen aufliegt und klappern kann und nach wie vor Verschmutzungen in das Innere der Verkleidung hinein gelangen können.

Die Erfindung hat die Aufgabe eine Anschlußverkleidung für Heizkörper-Vor- und/oder Rücklauf-Anschlüsse zu schaffen, die einfach und kostengünstig ausgebildet und montierbar ist, und die den festen Sitz der Kunststoff-Formteile auf den Anschlüssen gewährleistet.

Diese Aufgabe wird erfindungsgemäß durch die Kennzeichenmerkmale des Anspruches 1 gelöst.

Die erfindungsgemäß vorgesehenen elastisch verformbaren Rippen im Inneren der Kunststoff-Formteile liegen auf im wesentlichen rohrförmigen Teilen der Anschlüsse derart auf, daß sie diese Anschlüsse klemmend umgreifen. Damit wird einerseits ein fester Sitz der Kunststoff-Formteile und damit der erfindungsgemäßen Anschlußverkleidung auf den Anschlüssen gewährleistet. Andererseits wird damit das ungewollte Eindringen von Staub und anderem Schmutz in die Anschlußverkleidung vermieden.

Die beschriebenen Vorteile der Erfindung werden dabei nahezu kostenneutral gegenüber dem Vorbekannten erzielt, weil für die erfindungsgemäße Ausbildung der Kunststoff-Formteile allein die elastisch verformbaren Rippen erforderlich sind. Auf Grund der elastischen Verformbarkeit der Rippen ist ein Anpassen der Kunststoff-Formteile an die zu verkleidenenden Anschlüsse durch Wegschneiden von Teilen der Rippen bei der erfindungsgemäßen Lösung nicht erforderlich, was die Montage der erfindungsgemäßen Anschlußverkleidung an den Anschlüssen gegenüber dem Vorbekannten vereinfacht.

Vorteilhafte Ausgestaltungen und Weiterbildungen der Erfindung gehen aus den Unteransprüchen hervor.

Die Rippen können teilweise umlaufend ausgebildet sein, um einerseits die Montage der erfindungsgemäßen Anschlußverkleidung auf den Anschlüssen nicht unnötig zu erschweren, und um anderseits mit einfachen Mitteln die zumindest teilweise elastische Verformbarkeit der Rippen zu gewährleisten. Andererseits können die Rippen bei entsprechend dünner Ausbildung auch nahezu vollständig umlaufend ausgebildet sein. Dies ist insbesondere dann von Vorteil, wenn die Teile der Anschlüsse an denen die Rippen angreifen nur im wesentlichen rohrförmige Querschnitte aufweisen. Dies gilt beispielsweise für Außensechskant-Ausbildungen.

Die Rippen können auch in Ausnehmungen der Kunststoff-Formteile angeordnet sein. Diese Ausnehmungen sind verengte Bereiche der Kunststoff-Formteile, die die Anschlüsse allein aus optischen Gründen eng umgeben, so daß die Rippen nur eine geringe Höhe aufweisen müssen. Die Rippen können besonders vorteilhaft einstückig mit den Kunststoff-Formteilen beispielsweise als dünne Schwimmhäute aus Kunststoff gespritzt sein.

Auch die Verbindungselemente können besonders vorteilhaft, da einfach und kostengünstig, einstückig mit den Kunststoff-Formteilen aus Kunststoff gespritzt sein. Diese Verbindungselemente können insbesondere in diesem Fall aus Sacköffnungen bestehen, die Hinterschneidungen aufweisen in die jeweils korrespondierende, hohle Vorsprünge mit Hinterschneidung eingreifen. Die Ausbildung derartiger Sacköffnungen ist spritztechnisch problemlos machbar. Werden die Hinterschneidungen nicht zu tief gewählt, so können auch einfache Spritzwerkzeuge verwendet werden. Die hohle Ausbildung des Vorsprunges soll die Verwendung dieser einfachen Werkzeuge ermöglichen. Um eine zumindest in gewissen Grenzen mögliche Anpassung der Lage der Kunststoff-Formteile zueinander zu ermöglichen, ist es besonders vorteilhaft wenn die Hinterschneidungen der hohlen Vorsprünge konisch geformt sind, um bei Anliegen der teilweise elastisch verformbaren Rippen an den rohrförmigen Teilen der Anschlüsse möglicherweise vorhandene Toleranzen auszugleichen.

Ein Ausführungsbeispiel der erfindungsgemäßen Anschlußverkleidung ist in den Zeichnungen dargestellt und wird im folgenden Anhang der Zeichnungen näher erläutert.

Es zeigen
- Fig. 1: ein Heizkörper-Thermostatventil mit einer den eigentlichen Ventilbereich umgebenden Anschlußverkleidung
- Fig. 2: dieselbe Anordnung mit einem abgenommenen Kunststoff-Formteil der Anschlußverkleidung
- Fig. 3: ein zweites Kunststoff-Formteil der Anschlußverkleidung gemäß Fig. 1
- Fig. 4: ein erstes Kunststoff-Formteil der Anschlußverkleidung gemäß Fig. 1
- Fig. 5: ein Detail der Kunststoff-Formteile mit Rippe und
- Fig. 6: Teile der Kunststoff-Formteile im Bereich der druckknopfverschlußartigen Verbindungselemente.

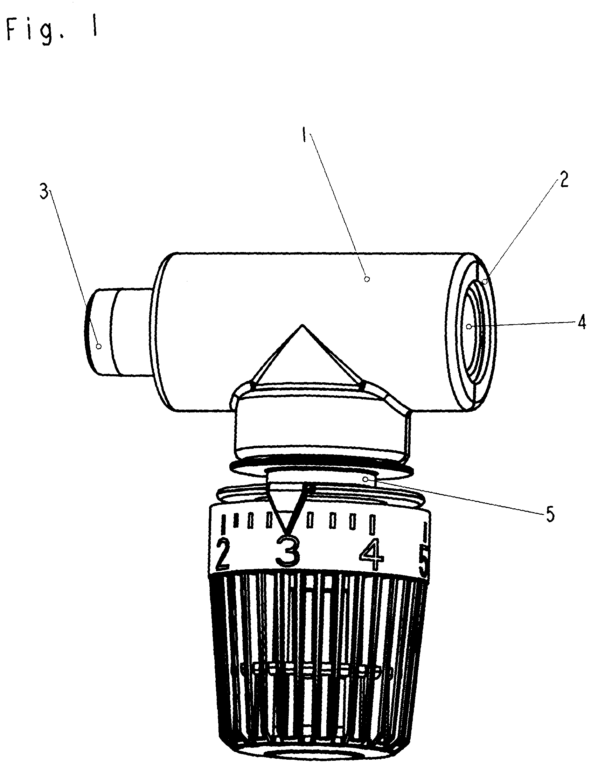

In der Fig. 1 umgibt eine Anschlußverkleidung mit zwei schalenförmigen Kunststoff-Formteilen (1), (2) die Anschlüsse (3), (4), (5) eines Heizkörper-Thermostatventiles. Die Anschlüsse (3), (4) sind dabei mit dem Heizkörper bzw. mit dem übrigen Teil der Heizungsanlage verbunden. Der Anschluß (5) trägt die Betätigungshandhabe des Heizkörper-Thermostatventiles.

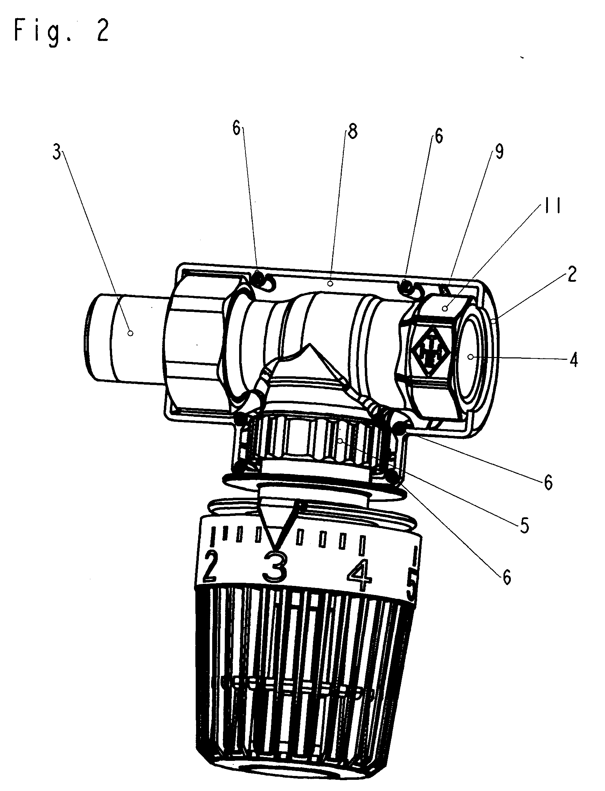

Wie aus der Fig. 2 ersichtlich ist, die bezüglich gleicher oder gleichwirkender Einrichtungsteile mit denselben Bezugszeichen versehen ist, weist das zweite Kunststoff-Formteil einen Teil der druckknopfverschlußartigen Verbindungselemente (6) auf. Diese druckknopfverschlußartigen Verbindungselemente (6), (7) sind wie teilweise elastisch verformbare Rippen (9) im Inneren (8) der Kunststoff-Formteile (1), (2) angeordnet. Diese Rippen (9) umgreifen klemmend eine Außensechskant-Überwurfmutter als im wesentlichen rohrförmiges Teil (11) des Anschlusses (4).

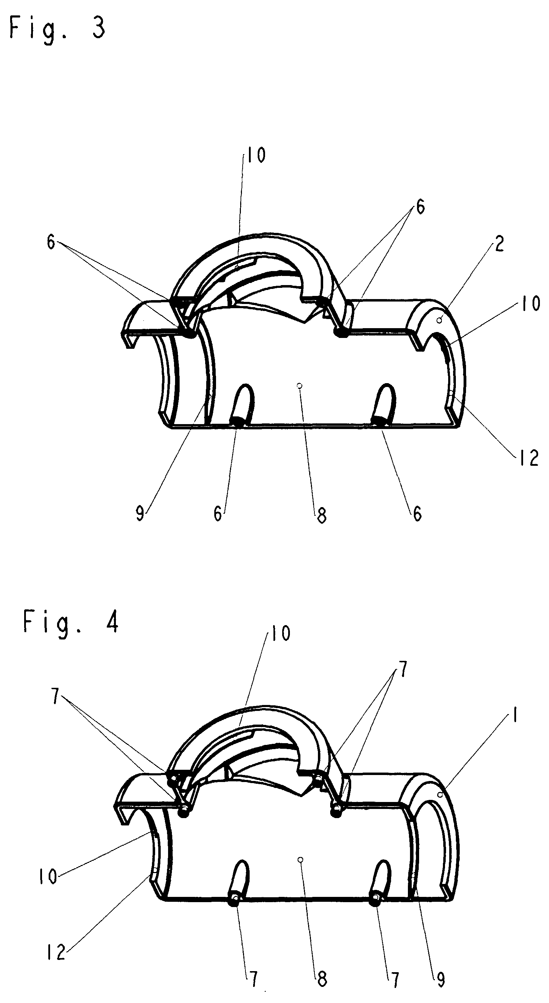

In der Fig. 3 sind gleiche oder gleichwirkende Einrichtungsteile wie in den Fig. 1 und 2 mit denselben Bezugszeichen versehen. In der Fig. 3 erkennt man nochmal das Innere (8) des zweiten Kunststoff-Formteiles (2) mit einer Rippe (9), die nahezu vollständig umlaufend ausgebildet ist. Darüberhinaus weist das Kunststoff-Formteil (2) noch teilweise umlaufend ausgebildete Rippen (10) auf, von denen eine Rippe (10) in der Fig. 3 rechts in einer Ausnehmung (12) des Kunststoff-Formteiles angeordnet ist, die den Anschluß (3) klemmend umgreift.

In der Fig. 4 sind ebenfalls gleiche oder gleichwirkende Einrichtungsteile wie in den Fig. 1 bis 3 mit denselben Bezugszeichen versehen. Man erkennt daß auch das erste Kunststoff-Formteil (1) nahezu vollständig umlaufende Rippen (9) und teilweise umlaufend ausgebildete Rippen (10) aufweist, wobei korrespondierend zu dem zweiten Formteil (2) eine der teilweise umlaufend ausgebildeten Rippen (10) in der Fig. 4 links in einer Ausnehmung (12) des ersten Kunststoff- Formteiles (1) angeordnet ist. Zusätzlich weist das erste Kunststoff-Formteil (1) in seinem Inneren (8) einen weiteren korrespondierenden Teil der druckknopfverschlußartigen Verbindungselemente (7) auf.

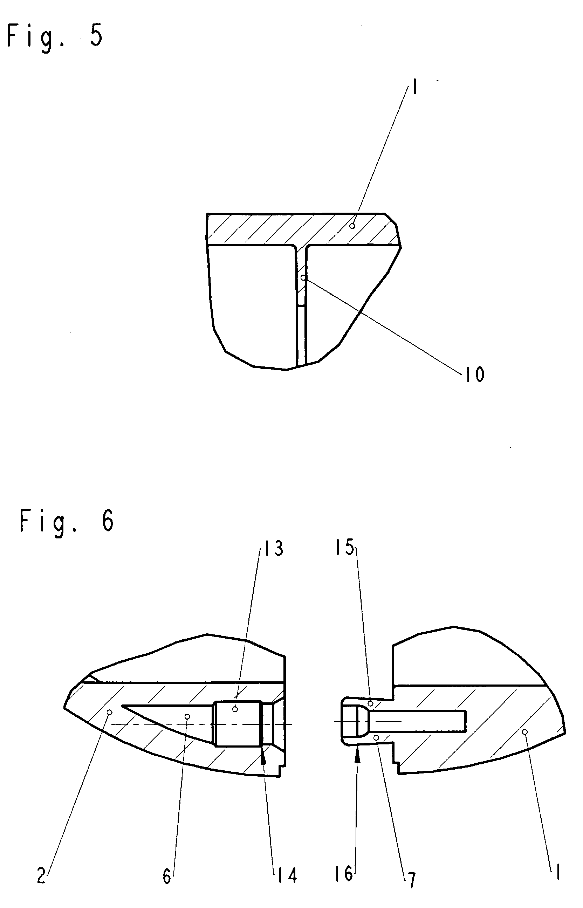

In der Fig. 5 wird erkennbar, daß das Kunststoff-Formteil (1) beispielsweise einstückig angeformt eine Rippe (10) aufweist. Das heißt die Kunststoff-Formteile (1), (2) werden einstückig mit den Rippen (9), (10) aus thermoplastischem Kunststoff gespritzt.

In der Fig. 6 wird die Ausbildung der druckknopfverschlußartigen Verbindungselemente (6), (7) deutlich. Dabei weist das erste Kunststoff-Formteil (1) hohl ausgebildete Vorsprünge (15) auf, die den ersten Teil der Verbindungselemente (7) bilden. Diese hohlen Vorsprünge (15) sind mit Hinterschneidungen (16) versehen, die konisch geformt sind. Diese hohlen Vorsprünge (15) greifen in Sacköffnungen (13) des zweiten Kunststoff-Formteiles (2) ein, die den zweiten korrespondierenden Teil der druckknopfverschlußartigen Verbindungselemente (6) bilden. Auch diese Sacköffnungen (13) sind mit Hinterschneidungen (14) versehen, wobei jedoch diese Hinterschneidungen stufig oder stark konisch geformt sind. Durch die stufige Ausbildung der Hinterschneidungen (14) der Sacköffnungen (13) und die schwach konische Ausbildung der Hinterschneidungen (16) der hohlen Vorsprünge (15) können die hohlen Vorsprünge (15) so weit in die Sacköffnungen (13) der Verbindungselemente (6) eingreifen wie dies die Verformung der Rippen (9), (10) im Inneren (8) der Kunststoff-Formteile (1), (2) zulässt. Damit ist ein fester Klemmsitz der erfindungsgemäßen Anschlußverkleidung auf den Anschlüssen (3), (4), (5) ohne Beschädigung der Kunststoff-Formteile (1), (2) gewährleistet.

## Patentansprüche

1. Anschlußverkleidung für Heizkörper-Vor-und/oder Rücklauf-Anschlüsse mit mindestens zwei schalenförmigen Kunststoff-Formteilen (1), (2) die die Anschlüsse (3), (4), (5) umgeben und die mittels druckknopfverschlußartigen Verbindungselementen (6), (7) lösbar miteinander verbunden sind dadurch gekennzeichnet, daß die Kunststoff-Formteile (1), (2) in ihrem Inneren (8) zumindest teilweise elastisch verformbare Rippen (9), (10) aufweisen, die im wesentlichen rohrförmige Teile (11) der Anschlüsse (3), (4), (5) klemmend umgreifen.

2. Anschlußverkleidung nach Anspruch 1, dadurch gekennzeichnet, daß die Rippen (10) teilweise umlaufend ausgebildet sind.

3. Anschlußverkleidung nach Anspruch 1, dadurch gekennzeichnet, daß die Rippen (9) nahezu vollständig umlaufend ausgebildet sind.

4. Anschlußverkleidung nach Anspruch 1, dadurch gekennzeichnet, daß die Rippen (10) in Ausnehmungen (12) der Kunststoff-Formteile (1), (2)) angeordnet sind.

5. Anschlußverkleidung nach Anspruch 1, dadurch gekennzeichnet, daß die Rippen (9), (10) einstückig mit den Kunststoff-Formteilen (1), (2) aus Kunststoff gespritzt sind.

6. Anschlußverkleidung nach Anspruch 1, dadurch gekennzeichnet, daß die Verbindungselemente (6), (7) einstückig mit den Kunststoff-Formteilen (1), (2) aus Kunststoff gespritzt sind.

7. Anschlußverkleidung nach Anspruch 1, dadurch gekennzeichnet, daß die Verbindungselemente (6), (7) aus Sacköffnungen (13) bestehen, die Hinterschneidungen (14) aufweisen, in die jeweils korrespondierende hohle Vorsprünge (15) mit Hinterschneidung (16) eingreifen.

8. Anschlußverkleidung nach Anspruch 8, dadurch gekennzeichnet, daß die Hinterschneidungen (16) der hohlen Vorsprünge (15) konisch geformt sind.
